# EUROPEAN PATENT APPLICATION

(11) **EP 4 712 642 A1**
(43) Date of publication of application: **18.03.2026**
(21) Application number: 23937400.2
(22) Date of filing: 12.05.2023
(51) Int. Cl.: H04W 72/1268, H04W 8/22, H04W 72/0457

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/017959
(87) International publication number: WO 2024/236654

(57) **Abstract**

A terminal according to an aspect of the present disclosure includes: a control section that determines, based on at least one of report on whether simultaneous uplink transmission using a plurality of panels is supported and indication related to the simultaneous uplink transmission, a time period which the simultaneous uplink transmission is possible; and a transmitting section that transmits one or more uplink signals by using the time period. An aspect of the present disclosure enables UL transmission using a plurality of panels to be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement, and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems, a UE can use one of a plurality of panels (or beams) for uplink (UL) transmission. For Rel. 18 or later versions, in order to improve throughput/reliability in UL, it is under study that, for one or more transmission/reception points (TRPs), simultaneous multi-panel transmission (Simultaneous Transmission across Multiple Panels (STxMP)) using a plurality of panels is supported.

However, studies have not sufficiently been made on how operation of reporting about supporting of UL transmission (for example, simultaneous UL transmission) using a plurality of panels is controlled. Unless such studies are sufficiently made, UL transmission using a plurality of panels may not be appropriately performed, causing degradation in system performance such as throughput reduction.

In view of this, one object of the present disclosure is to provide a terminal, a radio communication method, and a base station that enable UL transmission to be appropriately controlled even when the UL transmission is performed using a plurality of panels.

### Solution to Problem

A terminal according to an aspect of the present disclosure includes: a control section that determines, based on at least one of report on whether simultaneous uplink transmission using a plurality of panels is supported and indication related to the simultaneous uplink transmission, a time period which the simultaneous uplink transmission is possible; and a transmitting section that transmits one or more uplink signals by using the time period.

### Advantageous Effects of Invention

An aspect of the present disclosure enables UL transmission using a plurality of panels to be appropriately performed.

### Brief Description of Drawings

[FIG. 1] FIG. 1 is a diagram to show an example of association between precoder types and TPMI indices.
[FIG. 2] FIGS. 2A and 2B are diagrams to show examples of UL transmission with a single panel.
[FIG. 3] FIGS. 3A to 3C are diagrams to show examples of schemes 1 to 3 of simultaneous UL transmission using multi-panel.
[FIG. 4] FIGS. 4A to 4C are each a diagram to show an example of a PUSCH transmission scheme.
[FIG. 5] FIGS. 5A to 5C are each a diagram to show another example of the PUSCH transmission scheme.
[FIG. 6] FIG. 6 is a diagram to show an example of simultaneous UL transmission using multi-panel.
[FIG. 7] FIG. 7 is a diagram to show an example of simultaneous transmission of PUSCHs and a PUCCH.
[FIG. 8] FIG. 8 is a diagram to show an example of a CSI report for multi-group-based beam reporting in Rel-17 NR or later versions.
[FIG. 9] FIGS. 9A to 9D are each a diagram to show an example of an STxMP scheme.
[FIG. 10] FIG. 10 is a diagram to show an example of panel activation according to a first embodiment.
[FIG. 11] FIG. 11 is a diagram to show another example of the panel activation according to the first embodiment.
[FIG. 12] FIG. 12 is a diagram to show an example of a CSI report according to a second embodiment.
[FIG. 13] FIG. 13 is a diagram to show an example of a schematic structure of a radio communication system according to one embodiment.
[FIG. 14] FIG. 14 is a diagram to show an example of a structure of a base station according to one embodiment.
[FIG. 15] FIG. 15 is a diagram to show an example of a structure of a user terminal according to one embodiment.
[FIG. 16] FIG. 16 is a diagram to show an example of a hardware structure of the base station and the user terminal according to one embodiment.
[FIG. 17] FIG. 17 is a diagram to show an example of a vehicle according to one embodiment.

### Description of Embodiments

### (PUSCH Precoder)

For NR, it is under study that a UE supports at least one of codebook (CB) based transmission and non-codebook (NCB) based transmission.

For example, it is under study that the UE determines a precoder (precoding matrix) for at least one of CB based uplink shared channel (Physical Uplink Shared Channel (PUSCH)) transmission and NCB based PUSCH transmission by using at least a reference signal for measurement (Sounding Reference Signal (SRS)) resource indicator (SRS Resource Indicator (SRI)).

In a case of CB based transmission, the UE may determine a precoder for the PUSCH transmission, based on an SRI, a transmitted rank indicator (TRI), a transmitted precoding matrix indicator (TPMI), or the like. In a case of NCB based transmission, the UE may determine a precoder for the PUSCH transmission, based on the SRI.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by precoding information and number of layers field ("Precoding information and number of layers" field) of the DCI.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence").

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of a PMI specified by the TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent").

Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

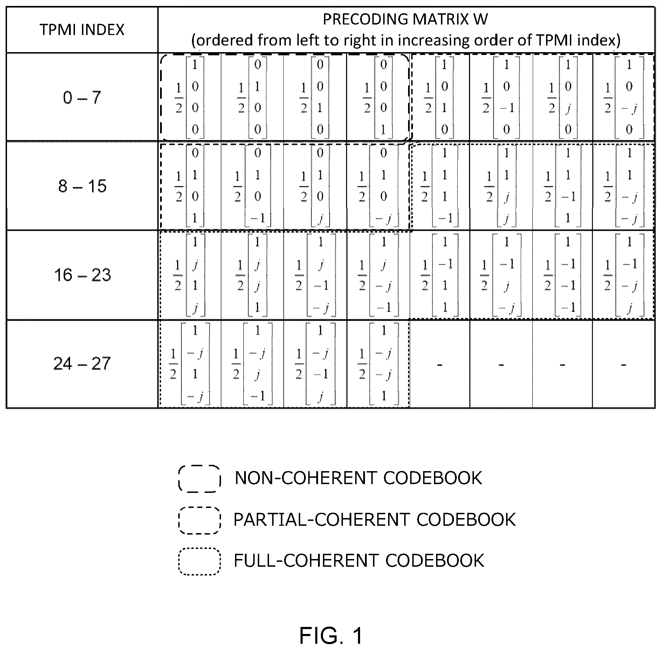

FIG. 1 is a diagram to show an example of association between precoder types and TPMI indices. FIG. 1 corresponds to a table of precoding matrices W for single-layer (rank 1) transmission using four antenna ports with DFT-s-OFDM (Discrete Fourier Transform spread OFDM, with transform precoding enabled).

In FIG. 1, in a case where the precoder type (codebookSubset) is fullyAndPartialAndNonCoherent, a UE is notified of a TPMI of any one of 0 to 27, for single-layer transmission. In a case where the precoder type is partialAndNonCoherent, the UE is configured with a TPMI of any one of 0 to 11, for single-layer transmission. In a case where the precoder type is nonCoherent, the UE is configured with a TPMI of any one of 0 to 3, for single-layer transmission.

Note that, as shown in FIG. 1, a precoding matrix with only one element per column being other than 0 may be referred to as a non-coherent codebook. A precoding matrix with only a certain number of elements (not all elements) per column being other than 0 may be referred to as a partial-coherent codebook. A precoding matrix with none of the elements per column being 0 may be referred to as a full-coherent codebook.

The non-coherent codebook and the partial-coherent codebook may each be referred to as an antenna selection precoder. The full-coherent codebook may be referred to as a non-antenna selection precoder.

Note that, in the present disclosure, the partial-coherent codebook may correspond to a codebook (i.e., codebooks with TPMI = 4 to 11, in a case of single-layer transmission with four antenna ports) obtained by excluding a codebook corresponding to a TPMI specified for a UE configured with a non-coherent codebook subset (for example, the RRC parameter "codebookSubset" = "nonCoherent") from codebooks (precoding matrices) corresponding to TPMIs specified, by DCI, for codebook based transmission, for a UE configured with a partial-coherent codebook subset (for example, the RRC parameter "codebookSubset" = "partialAndNonCoherent").

Note that, in the present disclosure, the full-coherent codebook may correspond to a codebook (i.e., codebooks with TPMI = 12 to 27, in a case of single-layer transmission with four antenna ports) obtained by excluding a codebook corresponding to a TPMI specified for a UE configured with a partial-coherent codebook subset (for example, the RRC parameter "codebookSubset" = "partialAndNonCoherent") from codebooks (precoding matrices) corresponding to TPMIs specified, by DCI, for codebook based transmission, for a UE configured with a full-coherent codebook subset (for example, the RRC parameter "codebookSubset" = "fullyAndPartialAndNonCoherent").

### (Control of Transmission of SRS and PUSCH)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), and an aperiodic CSI (Aperiodic SRS (A-SRS)). Note that the UE may transmit a P-SRS and an SP-SRS periodically (or periodically after activation), and transmit an A-SRS on the basis of an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

For example, in a case of codebook based transmission (codebook-based transmission), the UE may determine a precoder (precoding matrix) for the PUSCH transmission, based on an SRI, a transmitted rank indicator (TRI), and a transmitted precoding matrix indicator (TPMI). In a case of non-codebook based transmission (non-codebook-based transmission), the UE may determine a precoder for the PUSCH transmission, based on an SRI.

The SRS resource information may include an SRS resource ID (SRS-ResourceId), the number of SRS ports, an SRS port number, a transmission Comb, SRS resource mapping (for example, time and/or frequency resource position, resource offset, resource periodicity, the number of times of repetition, the number of SRS symbols, SRS bandwidth, and the like), hopping related information, an SRS resource type, a sequence ID, spatial relation information for an SRS, and the like.

The spatial relation information for an SRS (for example, an RRC information element "spatialRelationInfo") may indicate spatial relation information between a certain reference signal and the SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information for the SRS may include, as an index for the certain reference signal described above, at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information for the SRS may include a serving cell index, a BWP index (BWP ID), and the like corresponding to the certain reference signal described above.

With respect to a certain SRS resource, when spatial relation information related to an SSB or CSI-RS and an SRS is configured, the UE may transmit the SRS resource by using a spatial domain filter (spatial domain transmission filter) the same as a spatial domain filter (spatial domain reception filter) for reception of the SSB or CSI-RS. In this case, the UE may assume that a UE receive beam for the SSB or CSI-RS is the same as a UE transmit beam for the SRS.

With respect to a certain SRS (target SRS) resource, when spatial relation information related to another SRS (reference SRS) and the SRS (target SRS) is configured, the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam for the reference SRS is the same as a UE transmit beam for the target SRS.

Based on a value of a certain field (for example, an SRS resource indicator (SRI) field) in DCI (for example, DCI format 0_1), the UE may determine a spatial relation of a PUSCH scheduled by the DCI. Specifically, the UE may use, for the PUSCH transmission, spatial relation information (for example, the RRC information element "spatialRelationInfo") of an SRS resource determined based on the value (for example, SRI) of the certain field.

In Rel-15/16 NR, in a case where codebook based transmission is used for a PUSCH, the UE may be configured with an SRS resource set including two SRS resources at maximum with codebook usage, by RRC, and may be indicated with one of the two SRS resources at maximum by DCI (one-bit SRI field). A transmit beam for the PUSCH may be specified by an SRI field.

The UE may determine a TPMI and the number of layers (transmission rank) for the PUSCH on the basis of the Precoding information and number of layers field (hereinafter, also referred to as a "precoding information field"). From an uplink codebook for the number of ports the same as the number of SRS ports indicated by a higher layer parameter "nrofSRS-Ports" configured for an SRS resource specified by the SRI field described above, the UE may select a precoder on the basis of the TPMI, the number of layers, and the like.

In Rel-15/16 NR, in a case where non-codebook based transmission is used for a PUSCH, the UE may be configured with an SRS resource set including four SRS resources at maximum with non-codebook usage, by RRC, and may be indicated with one or more of the four SRS resources at maximum by DCI (two-bit SRI field).

The UE may determine the number of layers (transmission rank) for the PUSCH, based on the SRI field. For example, the UE may determine that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook based PUSCH transmission or use non-codebook based PUSCH transmission by a higher layer parameter "txConfig" indicating a transmission scheme. The parameter may indicate a value of "codebook" or "non-codebook (nonCodebook)."

In the present disclosure, a codebook based PUSCH (codebook based PUSCH transmission, codebook based transmission) may mean a PUSCH when the UE is configured with "codebook" as a transmission scheme. In the present disclosure, a non-codebook based PUSCH (non-codebook based PUSCH transmission, non-codebook based transmission) may mean a PUSCH when the UE is configured with "non-codebook" as a transmission scheme.

Incidentally, for future radio communication systems (for example, Rel-18 NR (or later versions)), it is assumed that, for one or more transmission/reception points (TRPs), simultaneous UL transmission (for example, simultaneous multi-panel UL transmission (STxMP)) using a plurality of beams/panels/TRPs is supported.

For example, for Rel. 18, simultaneous UL transmission using up to two TRPs/two panels is under study. It is assumed that, taking account of single-DCI-based and multi-DCI-based multi-TRP operations, the total number of layers is four layers at maximum over all the panels and the total number of codewords is two at maximum over all the panels. The number of TRPs, the number of panels, the number of layers, and the number of codewords are, of course, not limited to this.

### (Single-panel Transmission)

For a single-panel UL transmission scheme or single-panel UL transmission scheme candidate, at least one of the following transmission schemes A and B (single-panel UL transmission schemes A and B) may be applied. Note that, in the present disclosure, a panel/UE panel may be interpreted as a UE capability value set reported per UE capability. In the present disclosure, a different panel, a different spatial relation, a different joint TCI state, a different TPC parameter, a different antenna port, and the like may be interchangeably interpreted.

### <Transmission Scheme A: Single-panel Single-TRP UL Transmission>

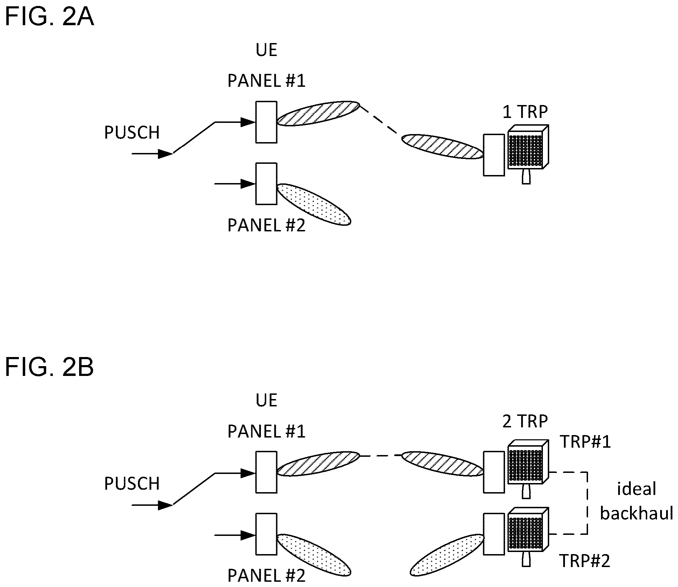

In Rel. 15 and Rel. 16, for a UE, a transmission scheme is used that, at one time point, UL is transmitted for one TRP from only one beam and panel (FIG. 2A).

### <Transmission Scheme B: Single-panel Multi-TRP UL Transmission>

For Rel. 17, it is under study that, at one time point, UL transmission from only one beam and panel is performed and the repetition transmission is performed for a plurality of TRPs (FIG. 2B). In an example of FIG. 2B, a UE transmits a PUSCH from panel #1 to TRP #1 and then (switches the beam and panel and) transmits a PUSCH from panel #2 to TRP #2. The two TRPs are connected to each other through ideal backhaul.

### (Multi-panel Transmission)

For Rel. 18 or later versions, in order to improve throughput/reliability in UL, it is under study that, for one or more TRPs, simultaneous UL transmission (for example, simultaneous multi-panel UL transmission (STxMP)) using a plurality of panels is supported. For a certain UL channel (for example, PUSCH/PUCCH) or the like, a multi-panel UL transmission scheme is under study.

For multi-panel UL transmission, for example, up to X (for example, X = 2) and up to Y (for example, Y = 2) panels may be supported. In the multi-panel UL transmission, when UL precoding indication for a PUSCH is supported, a codebook of an existing system (for example, Rel. 16 or earlier versions) may be supported for multi-panel simultaneous transmission. Taking account of single-DCI-based and multi-DCI-based multi-TRP operations, the number of layers may be x (for example, x = 4) at maximum for all the panels and the number of codewords (CWs) may be y (for example, y = 2) at maximum for all the panels.

For a multi-panel UL transmission scheme or multi-panel UL transmission scheme candidate, at least one of the following schemes 1 to 3 (multi-panel UL transmission schemes 1 to 3) is under study. Only one of the transmission schemes 1 to 3 may be supported. A plurality of schemes including at least one of the transmission schemes 1 to 3 may be supported and one of the plurality of transmission schemes may be configured for a UE.

### <Transmission Scheme 1: Coherent Multi-panel UL Transmission>

A plurality of panels may be synchronized with each other. Layers are all mapped to every panel. A plurality of analog beams are indicated. An SRS resource indicator (SRI) field may be extended. With this scheme, up to four layers may be used for UL.

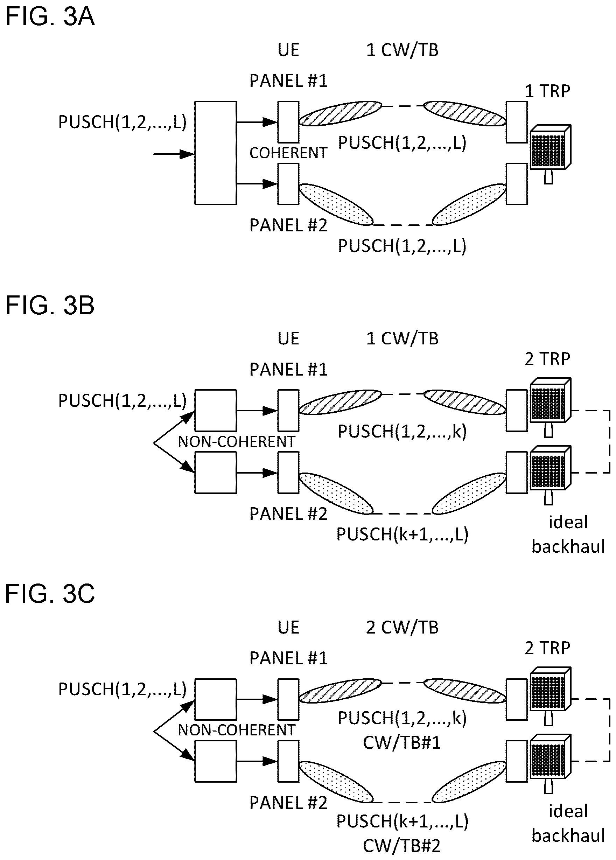

In an example of FIG. 3A, a UE maps one codeword (CW) or one transport block (TB) to L layers (PUSCHs (1, 2, ..., L)) and transmits the L layers from two panels each. Panel #1 and panel #2 are coherent with each other. Transmission scheme 1 allows gain due to diversity to be obtained. The total number of layers for the two panels is 2L. When the maximum value of the total number of layers is four, the maximum value of the number of layers in one panel is two.

### <Transmission Scheme 2: Non-coherent Multi-panel UL Transmission of One Codeword (CW) or Transport Block (TB)>

A plurality of panels may not need to be synchronized with each other. Different layers are mapped to different panels and to one CW or TB for PUSCHs from the plurality of panels. Layers corresponding to one CW or TB may be mapped to a plurality of panels. With this transmission scheme, up to four layers or up to eight layers may be used for UL. When up to eight layers are supported, this transmission scheme may support one CW or TB using up to eight layers.

In an example of FIG. 3B, a UE maps one CW or one TB to k layers (PUSCHs (1, 2, ..., k)) and L - k layers (PUSCHs (k + 1, k + 2, ..., L)), and transmits the k layers from panel #1 and transmits L - k layers from panel #2. Transmission scheme 2 allows gain due to multiplexing and diversity to be obtained. The total number of layers for the two panels is L.

### <Transmission Scheme 3: Non-coherent Multi-panel UL Transmission of two CWs or TBs>

A plurality of panels may not need to be synchronized with each other. Different layers are mapped to different panels and to two CWs or TBs for PUSCHs from the plurality of panels. Layers corresponding to one CW or TB may be mapped to one panel. Layers corresponding to a plurality of CWs or TBs may be mapped to a plurality of panels. With this transmission scheme, up to four layers or up to eight layers may be used for UL. When up to eight layers are supported, this transmission scheme may support up to four layers per CW or TB.

In an example of FIG. 3C, a UE maps CW #1 or TB #1, out of two CWs or two TBs, to k layers (PUSCHs (1, 2, ..., k)) and maps CW #2 or TB #2 to L - k layers (PUSCHs (k + 1, k + 2, ..., L)), and transmits the k layers from panel #1 and transmits L - k layers from panel #2. Transmission scheme 3 allows gain due to multiplexing and diversity to be obtained. The total number of layers for the two panels is L.

In each transmission scheme described above, a base station may configure or indicate panel-specific transmission for UL transmission, by using a UL TCI or panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relation information).

### (Simultaneous Multi-panel Transmission)

For one or more of the transmission schemes/modes described above, multi-panel UL transmission (for example, simultaneous multi-panel transmission (Simultaneous Transmission across Multiple Panels (STxMP))) with respect to scheduling of a PUSCH based on one piece of DCI (single DCI)/scheduling of a PUSCH based on a plurality of pieces of DCI (multi-DCI) is under study.

### <Single-DCI-based STxMP>

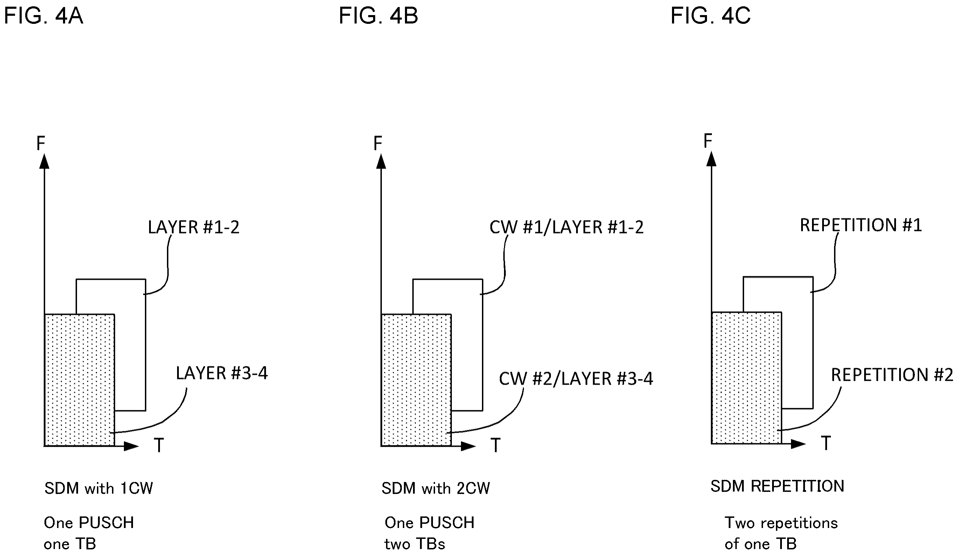

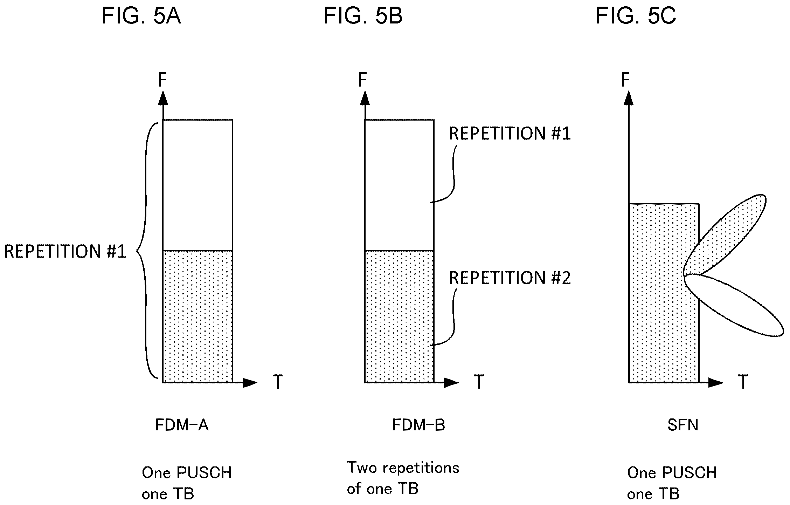

For simultaneous multi-panel transmission (STxMP) in a single-DCI-based multi-TRP system, the following scheme may be applied to UL transmission (for example, PUSCH).
- Space division multiplexing (SDM) scheme: different layers/DMRS ports of one PUSCH are separately precoded and simultaneously transmitted from different UE beams/panels (see FIGS. 4A and 4B)
- Space division multiplexing repetition (SDM repetition) scheme: two PUSCH transmission occasions having different redundancy versions (RVs) of the same TB are simultaneously transmitted from two different UE beams/panels on the same time and frequency resource (see FIG. 4C)
- Frequency division multiplexing (FDM)-A scheme: different parts in frequency domain resource of one transmission occasion for PUSCH (for example, one PUSCH transmission occasion) are transmitted from different UE beams/panels (see FIG. 5A)
- FDM-B scheme: two PUSCH transmission occasions having the same/different RV(s) of the same TB are transmitted from different UE beams/panels on frequency domain resources not overlapped and on the same time domain resource (see FIG. 5B)
- SFN-based transmission scheme: every same layer/DMRS port of one PUSCH are simultaneously transmitted from two different UE beams/panels (see FIG. 5C)

Note that, in the present disclosure, repetition transmission and transmission may be interchangeably interpreted. Transmission of a plurality of TBs may mean a plurality of times of transmission of the same TB or transmission of different TBs.

### {Space Division Multiplexing (SDM)}

A UE may assume that PUSCH repetition transmission applied with space division multiplexing (SDM) is scheduled in the same time resource and the same frequency resource. In other words, when a plurality of coherent panels are used, the UE may transmit, in the same time resource and the same frequency resource, PUSCH repetition transmission applied with SDM.

FIG. 4A is a diagram to show an example of repetition transmission applied with SDM with one CW. In FIG. 4A, layers #1-2 and layers #3-4 corresponding to a PUSCH/PUCCH are the same in time and frequency resources.

FIG. 4B is a diagram to show an example of repetition transmission applied with SDM with two CWs. In FIG. 4B, CW #1 and CW #2 corresponding to a PUSCH/PUCCH are the same in time and frequency resources.

FIG. 4C is a diagram to show an example of repetition transmission applied with SDM. In FIG. 4C, repetition #1 and repetition #2 of a PUSCH/PUCCH are the same in time and frequency resources.

Note that PUSCH transmission (for example, PUSCH repetition transmission) applied with SDM may have a configuration where at least part of time and frequency resources has an overlap.

### {Frequency Division Multiplexing (FDM)}

A UE may assume that PUSCH/PUCCH repetition transmission applied with frequency division multiplexing (FDM) is scheduled in the same time resource and different frequency resources. In other words, when a plurality of coherent panels are used, the UE may transmit, in the same time resource and different frequency resources, PUSCH/PUCCH repetition transmission applied with FDM.

FIG. 5A is a diagram to show a first example of repetition transmission applied with FDM (FDM-A). FIG. 5A shows an example where one time of PUSCH/PUCCH repetition transmission is performed per TB/UCI.

FIG. 5B is a diagram to show a second example of repetition transmission applied with FDM (FDM-B). FIG. 5B shows an example where two times of PUSCH/PUCCH repetition transmission are performed per TB/UCI.

FIG. 5C is a diagram to show an example of repetition transmission applied with a single frequency network (SFN). FIG. 5C shows an example where one PUSCH/PUCCH, per TB/UCI, is transmitted using different beams/panels.

As shown in FIGS. 4A and 4B, in a case where, for non-codebook PUSCH transmission, simultaneous multi-panel transmission (STxMP SDM scheme) based on the space division multiplexing scheme is performed, different layers/DMRS ports of one PUSCH can be separately precoded and simultaneously transmitted from different UP panels.

With respect to simultaneous multi-panel transmission based on the space division multiplexing scheme of a non-codebook based PUSCH, for example, the following two options are assumed as SRI indication.

### <<Option 1>>

One SRI combination is indicated. The SRI combination may be indicated from among non-codebook SRS resources across two panels (for example, NCB SRS resources across two panels).

### <<Option 2>>

A plurality of (for example, two) SRS combinations (for example, two SRI combinations) are indicated. Each SRI combination may be indicated from among non-codebook SRS resources of one panel (for example, NCB SRS resources of one panel).

The SRI combination may include one or a plurality of SRS resources (for example, SRS resources for non-codebook). For example, one SRI combination (or SRI field) may indicate SRI/SRS resources corresponding to each panel. The SRI combination may be interpreted as an SRI set or SRI group.

### <Multi-DCI-based STxMP>

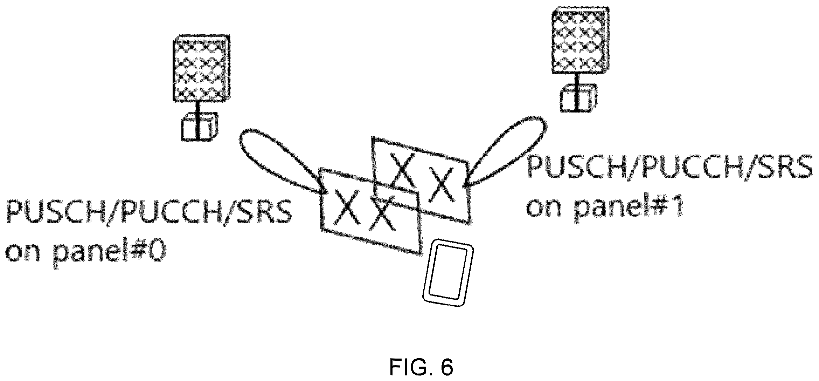

In Rel. 18 or later versions, in STxMP in a multi-DCI-based multi-TRP system, it is assumed that simultaneous transmission of UL channels/UL signals (for example, PUSCHs/PUCCHs/SRSs) (for example, PUSCH + PUSCH, PUSCH + PUCCH, SRS + SRS) is supported (see FIG. 6). As an example, it is assumed that at least one of simultaneous transmission of a plurality of PUSCHs (for example, PUSCH + PUSCH) and simultaneous transmission of a PUSCH and a PUCCH is supported.

For Rel. 18 or later versions, in simultaneous transmission of a PUSCH and a PUCCH, a method of multiplexing/mapping UCI for a case where one PUCCH overlaps with a plurality of PUSCHs is under study. The plurality of PUSCHs may be a plurality of PUSCHs (according to STxMP) to be simultaneously transmitted.

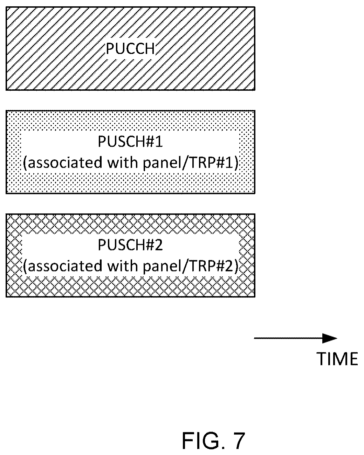

In this case, the plurality of PUSCHs may be associated with the respective different TRPs/panels (see FIG. 7).

In existing specifications (up to Rel. 17), regarding multi-DCI multi-TRP, when an RRC parameter "ackNackFeedbackMode" is configured with "separate," a UE does not assume that a PUSCH/PUCCH dynamically scheduled overlaps with another PUSCH/PUCCH dynamically scheduled, in the time domain (see FIG. 7).

A reason for this is that, when the RRC parameter "ackNackFeedbackMode" is configured with "separate," non-ideal backhaul is assumed between two TRPs and each TRP is not able to timely recognize dynamic scheduling of the other TRP.

Note that, in the present disclosure, a PUSCH/PUCCH dynamically scheduled may mean a PUSCH/PUCCH scheduled using a dynamic grant or a PUSCH/PUCCH dynamically scheduled using DCI.

### (Group-based Beam Reporting)

For future radio communication systems (for example, Rel. 17 or later versions), beam management related enhancement for a user terminal (User Equipment (UE)) with a plurality of panels (multi-panel), a plurality of transmission/reception points (multi-Transmission/Reception Point (TRP)), and the like (for example, which may be referred to as beam report suitable for a plurality of TRPs or enhanced group-based beam reporting) is under study.

The group-based beam reporting enables reporting, in one report, about one group including a plurality of (for example, two) CRIs/SSBRIs, and thus is suitable for a case where multi-TRP transmission, multi-panel reception, or the like is applied. For example, the group-based beam reporting can be used for reporting of the best beam for TRP 1 with RSRP #1 and the best beam for TRP 2 as differential RSRP #2.

In Rel. 15 and Rel. 16, a UE configured with the group-based beam reporting (groupBasedBeamReporting) enabled can report only one group including two different CRIs/SSBRIs (which may be interpreted as beam indices) per report configuration. Thus, for Rel. 17, enhancement of the number of groups possible to be reported by the group-based beam reporting is assumed.

For example, two channel measurement resource sets (for example, CMR sets) may be configured/triggered with a periodic/semi-persistent/aperiodic resource type. The two channel measurement resource sets (for example, CMR sets) may be, for example, two CSI-SSB-resource sets/two NZP-CSI-RS-resource sets. A UE may be configured to be able to report four groups of CRIs/SSBRIs at maximum. Note that the number of groups possible to be reported (or the number of candidates 1/2/3/4) may be configured by using a higher layer parameter (for example, nrofReportedGroups).

Each group may include a plurality of (for example, two) CRIs/SSBRIs. The CRIs/SSBRIs in each group may be selected from two CSI resource sets (CSI-SSB-resource sets/NZP-CSI-RS-resource sets) for report configuration (for example, report setting) each. Two CRIs/SSBRIs in each group may mean that simultaneous reception (for example, simultaneous reception using one spatial domain reception filter) is possible for the UE.

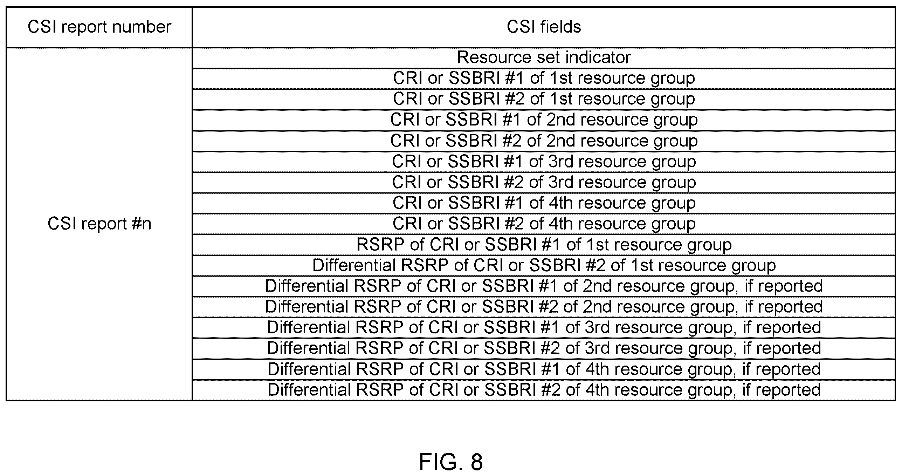

FIG. 8 is a diagram to show an example of a CSI report for a case where the enhanced group-based beam reporting is performed. FIG. 8 shows a mapping order of CSI fields included in one report (for example, n-th CSI report #n) for group-based CSI/RSRP or SSBRI/RSRP reporting.

The CSI report may include X resource groups at maximum (for example, X = 4). Each group includes a plurality of (for example, two) CRIs/SSBRIs. Here, a case is shown where CRI or SSBRI #1 and CRI or SSBRI #2 are reported, for each resource group.

The CSI fields may include a resource set indicator. A value of the resource set indicator may indicate a CSI resource set associated with a maximum measured value of L1-RSRP. A value of the resource set indicator may indicate a CSI resource set that CRI or SSBRI #1 of a first resource group is to be reported from. For example, the resource set indicator of one bit taking a value of 0 or 1 may respectively indicate a first or second CSI resource set, and CRI or SSBRI #1 of the first resource group may be reported therefrom. The rest of all the resource groups (for example, when there is another resource group(s) to be reported) follow the same mapping order as the first resource group. For example, CRI or SSBRI #1 of the rest of all the resource groups may be reported (or selected) from a CSI resource set indicated with the resource set indicator.

In other words, CRI or SSBRI #1 of each group may be reported (or selected) from a CSI resource set indicated with the resource set indicator and CRI or SSBRI #2 may be reported (or selected) from another CSI resource set. As described above, for every resource group, CRI or SSBRI #1 and CRI or SSBRI #2 may be reported from different CSI resource sets.

An RSRP corresponding to a beam index (for example, CRI or SSBRI) of each resource group is reported. For example, an RSRP of a CRI or SSBRI of a specific group may be reported and, for another RSRP, a differential from the RSRP of the CRI or SSBRI of the specific group may be reported. The RSRP of the CRI or SSBRI of the specific group may be an RSRP of CRI or SSBRI #1 of the first resource group.

The enhanced group-based beam reporting may be configured (or configured to be enabled/activated) by using a certain higher layer parameter (for example, groupBasedBeamReporting-r17). Alternatively, the enhanced group-based beam reporting may be determined to be enabled in a case where a higher layer parameter (for example, nrofReportedGroups-r17) related to the number of groups to be reported is configured.

### (Analysis)

As described above, for future radio communication systems (for example, Rel. 18 or later versions), it is under study that, in a UE, simultaneous UL transmission (for example, which may be referred to as simultaneous multi-panel UL transmission (STxMP)) using a plurality of beams/panels/TRPs is performed.

At least one of the plurality of panels may be activated/deactivated by the UE.

Depending on such panel activation/deactivation, whether STxMP is supported may be defined/determined.

In existing specifications (up to Rel. 17), reporting of a UE capability is performed using RRC signaling/message upon request of a network (NW, for example, base station).

However, studies have not sufficiently been made on a method of reporting whether a UE supports STxMP (for example, in a dynamic method).

Unless such studies are sufficiently made, UL channels/signals having an overlap may not be appropriately transmitted, causing degradation in system performance such as throughput reduction.

In view of this, the inventors of the present invention came up with the idea of a method of resolving such issues.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, multi-TRP, a multi-TRP system, a multi-TRP transmission, multi-PDSCH, a channel using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, a single TRP, single DCI, a single PDCCH, multi-TRP based on single DCI, a single-TRP system, a single-TRP transmission, a single PDSCH, a channel using a single TRP, a channel using one TCI state/spatial relation, multi-TRP being not enabled by RRC/DCI, a plurality of TCI states/spatial relations being not enabled by RRC/DCI, one CORESET pool index (CORESETPoolIndex) value being not configured for any CORESET and any codepoint of a TCI field being not mapped to two TCI states, and two TCI states on at least one TCI codepoint being activated may be interchangeably interpreted.

In the present disclosure, a panel, a UE capability value set, a TRP, an SRS resource set, a CORESET pool index, a beam group, a TCI state group, a spatial relation group, a reference signal group, a pathloss RS group, an antenna, an antenna port, a UL transmission space filter, and a UL spatial domain filter may be interchangeably interpreted.

In the present disclosure, STxMP, simultaneous UL transmission using multi-panel, UL transmissions at least in the same time resource/domain using multi-panel (a plurality of UL transmissions), UL transmissions at least in the same time resource/domain using multi-TRP (a plurality of UL transmissions), UL transmissions at least in the same time resource/domain for multi-TRP (a plurality of UL transmissions), and the like may be interchangeably interpreted.

In the present disclosure, ignoring, dropping, stopping, canceling, puncturing, rate matching, postponing, not transmitting, and the like may be interchangeably interpreted.

In the present disclosure, a UL channel, a UL signal, and a UL transmission may be interchangeably interpreted.

### (Radio Communication Method)

A UE may transmit, using a plurality of panels, one or more UL signals/channels at least in the same time domain (for example, the same time resource/symbol/slot/subslot). In the present disclosure, hereinafter, such transmission may be referred to as STxMP (operation/scheme).

In embodiments in the present disclosure, such transmission of one or more UL signals/channels may be referred to as STxMP.

### <First Embodiment>

A first embodiment describes operation of reporting related to supporting of STxMP.

The first embodiment is roughly divided into Embodiments 1-1 and 1-2. Embodiments 1-1 and 1-2 may each be employed individually or may be employed in combination.

### <<Embodiment 1-1>>

A UE may initiate reporting on whether to support STxMP.

The UE may perform the reporting.

The report may be transmitted, for example, using specific UL signaling (for example, at least one of UCI, MAC CE, and RRC signaling).

The UE may determine, based on the report, a time period which STxMP operation is possible.

The UE may transmit, using the time period, one or more UL channels/signals (for example, PUSCHs/PUCCHs/SRSs) by using STxMP.

After a specific time period (for example, X slots/symbols/subframes/ms) elapses after transmission (for example, the last symbol) of the report, the report may be employed.

For example, after the specific time period elapses after transmission of the report, operation related to STxMP may be employed.

The UE may receive a response signal (for example, ACK) corresponding to the report. After a specific time period (for example, X slots/symbols/subframes/ms) elapses after reception (for example, the last symbol) of the response signal corresponding to the report, the report may be employed.

For example, after the specific time period elapses after reception of the response signal corresponding to the report, operation related to STxMP may be employed.

For example, X described above may be defined in advance in a specification, may be configured for the UE by using higher layer signaling (RRC/MAC CE), may be indicated to the UE by using DCI, may be determined based on UE capability information to be reported, or may be determined based on a combination of at least two of them.

It may be reported that the UE does not support STxMP.

In this case, after employment of the report, the UE need not assume/expect that an NW configures/indicates STxMP.

In this case, after employment of the report, the UE need not assume/expect that the NW configures/indicates (for example, enhanced) group-based beam reporting for STxMP.

The scheme related to STxMP may be at least one of the following:
- single-DCI PUSCH SDM scheme
- single-DCI PUSCH SFN scheme
- multi-DCI (overlapping) PUSCH + PUSCH scheme
- single-DCI PUCCH SFN scheme
- PUCCH + PUCCH scheme
- PUSCH + PUCCH scheme
- SRS + SRS scheme
- SRS + PUSCH scheme
- SRS + PUCCH scheme

In the present disclosure, at least one of these STxMP schemes may be referred to as a specific STxMP scheme.

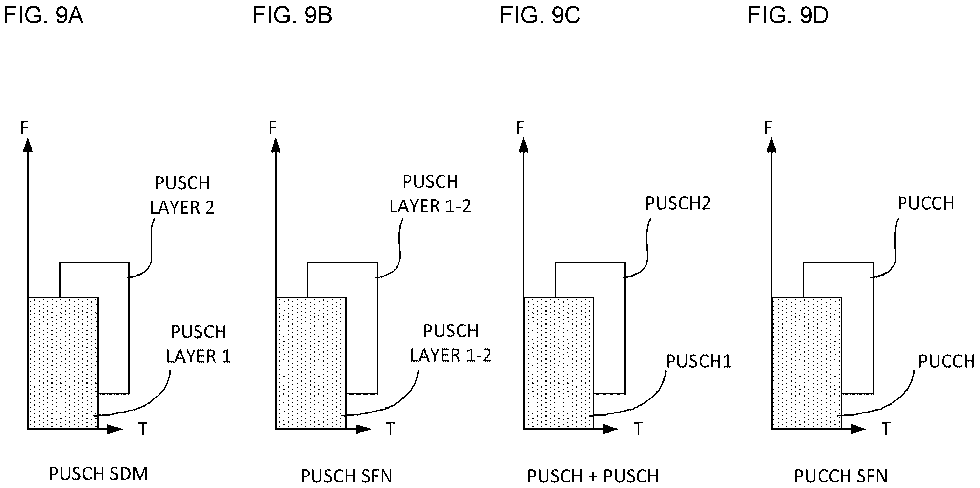

For example, the single-DCI PUSCH SDM scheme may mean that different layers/DMRS ports of one PUSCH scheduled/triggered by one piece of DCI are simultaneously transmitted (for different TRPs) by using different panels (FIG. 9A).

For example, the single-DCI PUSCH SFN scheme may mean that a plurality of (for example, all) layers/DMRS ports of one PUSCH scheduled/triggered by one piece of DCI are simultaneously transmitted (for different TRPs) by using different panels (FIG. 9B).

For example, the multi-DCI overlapping PUSCH + PUSCH scheme may mean that a plurality of (for example, two) PUSCHs having an overlap (at least partially) in a time domain are simultaneously transmitted (for different TRPs) by using different panels (FIG. 9C).

For example, the single-DCI PUCCH SFN scheme may mean that one PUCCH is simultaneously transmitted (for different TRPs) by using different panels (FIG. 9D).

For example, the PUCCH + PUCCH scheme may mean that a plurality of PUCCHs are simultaneously transmitted (for different TRPs) by using different panels.

For example, the PUCCH + PUSCH scheme may mean that a PUCCH and a PUSCH are simultaneously transmitted (for different TRPs) by using different panels.

For example, the SRS + SRS scheme may mean that a plurality of SRSs are simultaneously transmitted (for different TRPs) by using different panels.

For example, the SRS + PUSCH scheme may mean that an SRS and a PUSCH are simultaneously transmitted (for different TRPs) by using different panels.

For example, the SRS + PUCCH scheme may mean that an SRS and a PUCCH are simultaneously transmitted (for different TRPs) by using different panels.

In the present disclosure, although the scheme names described above are used for the sake of convenience, these are merely examples and scheme names are not limited thereto.

Note that, in the present disclosure, the (for example, enhanced) group-based beam reporting for STxMP may be the enhanced group-based beam reporting described above.

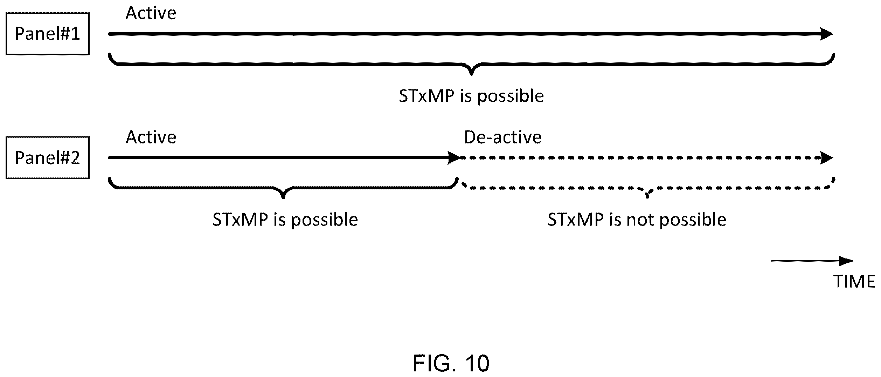

FIG. 10 is a diagram to show an example of panel activation according to the first embodiment. In the example shown in FIG. 10, an example of activation/deactivation of two panels (panels #1 and #2) for a UE is shown.

In the example shown in FIG. 10, STxMP (STxMP operation) is possible in a time period when the two panels (for example, panels #1 and #2) are active, and STxMP (STxMP operation) is not possible in a time period when only one panel (for example, panel #1) is active.

Note that the report in Embodiment 1-1 may be transmitted in a case where a specific event occurs. The specific event may be defined in advance in a specification.

The report in Embodiment 1-1 may be based on indication/triggering from an NW. Based on the indication/triggering, the UE may determine to perform the reporting.

Embodiment 1-1 enables panel activation/deactivation initiated by the UE to be appropriately performed.

### <<Embodiment 1-2>>

STxMP (STxMP operation) may be configured/indicated for a UE from an NW.

The UE may activate one or more panels. For example, the UE may always activate one or more panels.

In a case where the UE reports supporting of a specific STxMP scheme by using UE capability information, the UE may support the STxMP scheme.

For example, in a case where the UE reports supporting of a specific STxMP scheme by using UE capability information, the UE may support the STxMP scheme (always/all the time). In this case, the UE may assume that STxMP operation is not dynamically changed.

Configuration/indication related to STxMP may be transmitted, for example, using specific DL signaling (for example, at least one of DCI, MAC CE, and RRC signaling).

The UE may determine, based on the configuration/indication, a time period which STxMP operation is possible.

Based on the configuration/indication, the UE may activate one or more (a plurality of) panels.

The UE may transmit, using the time period, one or more UL channels/signals (for example, PUSCHs/PUCCHs/SRSs) by using STxMP.

After a specific time period (for example, X
slots/symbols/subframes/ms) elapses after reception (for example, the last symbol) of the configuration/indication, the UE may start employment of STxMP.

For example, from after the specific time period elapses after reception of the configuration/indication, the UE may employ a plurality of UL transmission space filters (spatial domain filters) simultaneously.

The UE may transmit a response signal (for example, ACK) corresponding to the configuration/indication. After a specific time period (for example, X slots/symbols/subframes/ms) elapses after transmission (for example, the last symbol) of the response signal, the UE may start employment of STxMP.

For example, from after the specific time period elapses after transmission of the response signal corresponding to the configuration/indication, the UE may employ a plurality of UL transmission space filters (spatial domain filters) simultaneously.

For example, X described above may be defined in advance in a specification, may be configured for the UE by using higher layer signaling (RRC/MAC CE), may be indicated to the UE by using DCI, may be determined based on UE capability information to be reported, or may be determined based on a combination of at least two of them.

The configuration/indication related to STxMP may be at least one of the following:
- indication of a plurality of joint/UL TCI states
- indication of a PUSCH/PUCCH/SRS to be applied with a plurality of joint/UL TCI states
- configuration of indices (for example, CORESET pool indices) related to a plurality of (for example, two) TRPs
- configuration/activation/indication of a plurality of (for example, two) CB/NCB SRS resource sets
- configuration/activation/indication of (enhanced) group-based beam reporting for STxMP
- enabling of an STxMP scheme by a corresponding higher layer parameter (RRC parameter)
- indication of an STxMP scheme in DCI (scheduling/triggering DCI) that schedules/triggers a UL channel/signal

For example, in a case where operation related to STxMP is configured for the UE by using RRC signaling and at least one of the above is configured/indicated, the UE may employ STxMP operation.

In the indication of an STxMP scheme in the scheduling/triggering DCI, a specific field included in the DCI may be used, for example.

The specific field may be, for example, an SRS resource set indicator field.

For example, when a codepoint of the specific field indicates a specific value, the UE may determine that an STxMP scheme is indicated.

The specific value may be, for example, a value (for example, "10"/"11") indicating multi-TRP operation.

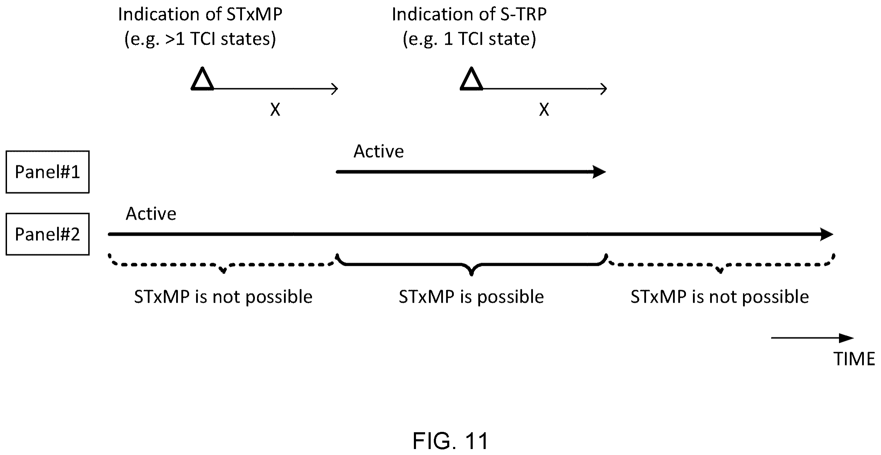

FIG. 11 is a diagram to show another example of the panel activation according to the first embodiment. In the example shown in FIG. 11, similarly to FIG. 10, an example of activation/deactivation of two panels (panels #1 and #2) for a UE is shown.

In the example shown in FIG. 11, the UE performs, based on indication received from an NW, activation of a plurality of panels (in the example of FIG. 11, panel #1 in addition to panel #2).

For example, from after time X elapses after reception of indication (indication of STxMP) of using a plurality of TCI states/spatial domain filters, panel #1 is activated. In a time period when panels #1 and #2 are activated, STxMP operation is possible. From after the time X elapses after reception of indication (indication of single-TRP (S-TRP)) of using one TCI state/spatial domain filter, the UE deactivates panel #1. In a time period when only panel #2 is activated, STxMP operation is not possible.

Note that at least one of a panel to be activated/deactivated (for example, panel #1 in FIG. 11) and a panel activated all the time (for example, panel #2 in FIG. 11) may be defined in advance in a specification, may be configured/notified using higher layer signaling/DCI, or may depend on UE implementation.

Embodiment 1-2 enables panel activation/deactivation in the UE initiated/indicated by the NW to be appropriately performed.

According to the first embodiment described above, reporting related to supporting of STxMP by the UE can be appropriately performed.

### <Second Embodiment>

A second embodiment describes a method of reporting related to supporting of STxMP.

A UE may perform reporting on whether to support STxMP (for example, explicitly/implicitly).

Such reporting may be reporting on whether to support STxMP, in the enhanced group-based beam reporting for STxMP, for example.

It may be reported that the UE does not support STxMP.

In this case, after employment of the report, the UE need not assume/expect that an NW configures/indicates STxMP.

In this case, after employment of the report, the UE need not assume/expect that the NW configures/indicates the (for example, enhanced) group-based beam reporting for STxMP.

### <<Embodiment 2-1>>

Beam report/CSI report may include a field indicating whether STxMP is supported.

Such beam reporting/CSI reporting may be, for example, the enhanced group-based beam reporting.

In a case where the field indicates that STxMP is supported, UL transmission space filters determined from a pair/combination of beam indicators (for example, CRIs/SSBRIs) to be reported may be (simultaneously) employed for STxMP.

Note that, in the present disclosure, a beam indicator, a beam, a CRI, and an SSBRI may be interchangeably interpreted.

In a case where the field indicates that STxMP is not supported, other contents/fields included in the beam report may be ignored (Option 2-1-A).

In a case where the field indicates that STxMP is not supported, a beam indicator (for example, CRI/SSBRI) included in the beam report and a corresponding measurement result (for example, L1-RSRP/SINR) may be enabled. In this case, UL transmission space filters determined from a pair/combination of beam indicators (for example, CRIs/SSBRIs) to be reported may not be simultaneously employed for STxMP (Option 2-1-B).

In this case, the NW may schedule, by using the beam reporting, transmission using a single panel. Based on the beam reporting, the UE may assume that transmission using a single panel is scheduled.

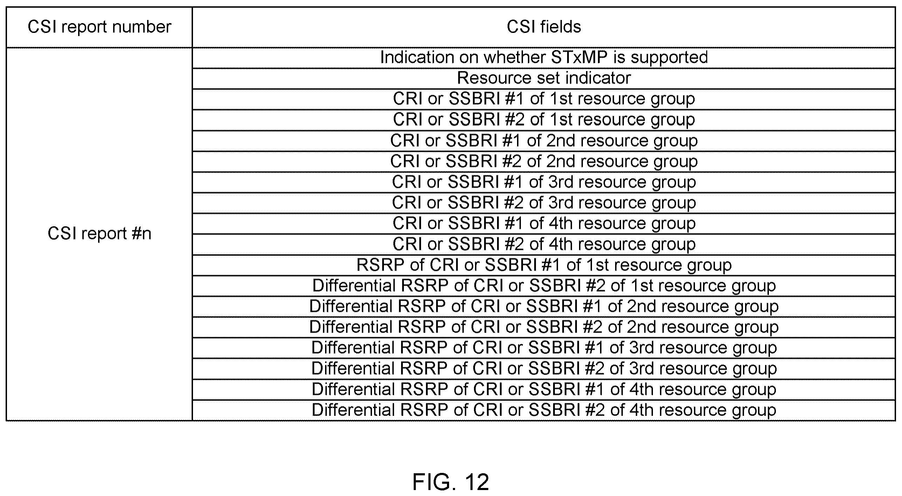

FIG. 12 is a diagram to show an example of a CSI report according to the second embodiment. FIG. 12 is an example of a CSI report in the group-based beam reporting, the CSI report including a field indicating whether STxMP is supported.

Note that, in the present disclosure, a pair/combination of CRIs/SSBRIs may mean a pair/combination of a first CRI/SSBRI (CRI/SSBRI #1) and a second CRI/SSBRI (CRI/SSBRI #2) that are corresponding to the same resource group.

In the present disclosure, "a field indicates that STxMP is not supported" may be interpreted as "the field does not indicate that STxMP is supported."

### <<Embodiment 2-2>>

In a case where a specific field included in a beam report is set to a specific value, this may indicate that a UE does not support STxMP.

The specific field may be, for example, at least one of a beam indicator (for example, CRI/SSBRI) field and a field indicating a corresponding measurement result (for example, L1-RSRP/SINR).

The specific value may be defined in advance in a specification.

For example, in a case where the CRI/SSBRI field is used for indication of supporting of STxMP, it may be assumed that the number of CSI-RS resources/SSB resources in one resource set is a specific number (for example, K).

For example, in a case where the CRI/SSBRI field indicates a value (for example, 0 to K - 1) smaller than a specific value, this may indicate that the UE supports STxMP.

For example, in a case where the CRI/SSBRI field indicates a specific value (for example, K), this may indicate that the UE does not support STxMP.

For example, a bit width of a CRI/SSBRI may be defined based on K. For example, the bit width of the CRI/SSBRI may be defined as ceil (log₂(K + 1)).

Note that, in the present disclosure, ceil(X) may mean (output by) a ceiling function of X. In the present disclosure, ceil(X) may be interpreted as floor(X) + 1. In the present disclosure, floor(X) may mean (output by) a floor function of X.

In a case where it is indicated that STxMP is not supported, a plurality of (for example, all) contents/fields included in the beam report may be ignored (Option 2-2-A).

In a case where it is indicated that STxMP is not supported, regarding fields other than a field indicating supporting of STxMP, a beam indicator (for example, CRI/SSBRI) included in the beam report and a corresponding measurement result (for example, L1-RSRP/SINR) may be enabled. In this case, UL transmission space filters determined from a pair/combination of beam indicators (for example, CRIs/SSBRIs) to be reported may not be simultaneously employed for STxMP (Option 2-2-B).

For example, in a case where a certain beam indicator (for example, CRI/SSBRI) field is used as a field indicating supporting of STxMP, a field indicating a corresponding measurement result (for example, L1-RSRP/SINR) may be ignored.

For example, in a case where the first CRI/SSBRI (for example, CRI/SSBRI #1 of the first resource group) is used as a field indicating supporting of STxMP, a corresponding first L1-RSRP/SINR field (for example, L1-RSRP/SINR corresponding to the CRI/SSBRI #1) may be enabled not ignored. With this, based on the first L1-RSRP/SINR field, in order to indicate a differential RSRP/SINR, another L1-RSRP/SINR field can be used.

For example, in a case where a field indicating a certain measurement result (for example, L1-RSRP/SINR) is used as a field indicating supporting of STxMP, a corresponding beam indicator (for example, CRI/SSBRI) field may be ignored.

For example, the first L1-RSRP/SINR field (for example, L1-RSRP/SINR corresponding to CRI/SSBRI #1 of the first resource group) may not be used as a field indicating supporting of STxMP. With this, based on the first L1-RSRP/SINR field, in order to indicate a differential RSRP/SINR, another L1-RSRP/SINR field can be used.

### <<Variations of Embodiment 2-2>>

Indication of whether the UE supports STxMP may be performed per pair/combination of beam indicators (for example, CRIs/SSBRIs).

Regarding one pair, in a case where one beam indicator (for example, CRI/SSBRI)/measurement result (for example, L1-RSRP/SINR) is set to a specific value, this may indicate that the UE does not support STxMP.

The specific value may be defined in advance in a specification.

For example, in a case where the CRI/SSBRI field is used for indication of supporting of STxMP, it may be assumed that the number of CSI-RS resources/SSB resources in one resource set is a specific number (for example, K).

For example, in a case where the CRI/SSBRI field indicates a value (for example, 0 to K - 1) smaller than a specific value, this may indicate that the UE supports STxMP.

For example, in a case where the CRI/SSBRI field indicates a specific value (for example, K), this may indicate that the UE does not support STxMP.

For example, a bit width of a CRI/SSBRI may be defined based on K. For example, the bit width of the CRI/SSBRI may be defined as ceil (log₂(K + 1)).

In a case where it is indicated that STxMP is not supported for one pair/combination, the pair/combination may be ignored (Option 2-2'-A).

In a case where it is indicated that STxMP is not supported for one pair/combination, regarding fields other than a field (for example, one CRI/SSBRI/L1-RSRP/L1-SINR) indicating supporting of STxMP, another beam indicator (for example, CRI/SSBRI) of the pair/combination and a corresponding measurement result (for example, L1-RSRP/SINR) may be enabled. In this case, UL transmission space filters determined from a pair/combination of beam indicators (for example, CRIs/SSBRIs) to be reported may not be simultaneously employed for STxMP (Option 2-2'-B).

For example, in a case where a certain beam indicator (for example, CRI/SSBRI) field is used as a field indicating supporting of STxMP, a field indicating a corresponding measurement result (for example, L1-RSRP/SINR) may be ignored.

For example, in a case where the first CRI/SSBRI (for example, CRI/SSBRI #1 of the first resource group) is used as a field indicating supporting of STxMP, the corresponding first L1-RSRP/SINR field (for example, L1-RSRP/SINR corresponding to the CRI/SSBRI #1) may be enabled not ignored. With this, based on the first L1-RSRP/SINR field, in order to indicate a differential RSRP/SINR, another L1-RSRP/SINR field can be used.

For example, in a case where a field indicating a certain measurement result (for example, L1-RSRP/SINR) is used as a field indicating supporting of STxMP, a corresponding beam indicator (for example, CRI/SSBRI) field may be ignored.

For example, the first L1-RSRP/SINR field (for example, L1-RSRP/SINR corresponding to CRI/SSBRI #1 of the first resource group) may not be used as a field indicating supporting of STxMP. With this, based on the first L1-RSRP/SINR field, in order to indicate a differential RSRP/SINR, another L1-RSRP/SINR field can be used.

According to the second embodiment described above, supporting of STxMP can be appropriately reported even when group beam based reporting is applied.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific
   processing/operation/control/information for at least one of the above-described embodiments
- supporting of STxMP (operation/scheme)
- supporting of (enhanced) group-based beam reporting
- supporting of dynamic reporting of supporting of STxMP

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. Examples of the specific information may include information indicating that a specific STxMP scheme is enabled, any RRC parameter for a specific release (for example, Rel. 18/19), and the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1}

A terminal including: a control section that determines, based on at least one of report on whether simultaneous uplink transmission using a plurality of panels is supported and indication related to the simultaneous uplink transmission, a time period which the simultaneous uplink transmission is possible; and a transmitting section that transmits one or more uplink signals by using the time period.

### {Supplementary Note 2}

The terminal according to supplementary note 1, wherein the control section determines that the time period starts after a specific time period elapses after transmission of the report or reception of the indication.

### {Supplementary Note 3}

The terminal according to supplementary note 1 or 2, wherein the control section determines that the time period starts after a specific time period elapses after reception of a response signal corresponding to the report or transmission of a response signal corresponding to the indication.

### {Supplementary Note 4}

The terminal according to any one of supplementary notes 1 to 3, wherein the report uses a specific field included in group-based beam reporting.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

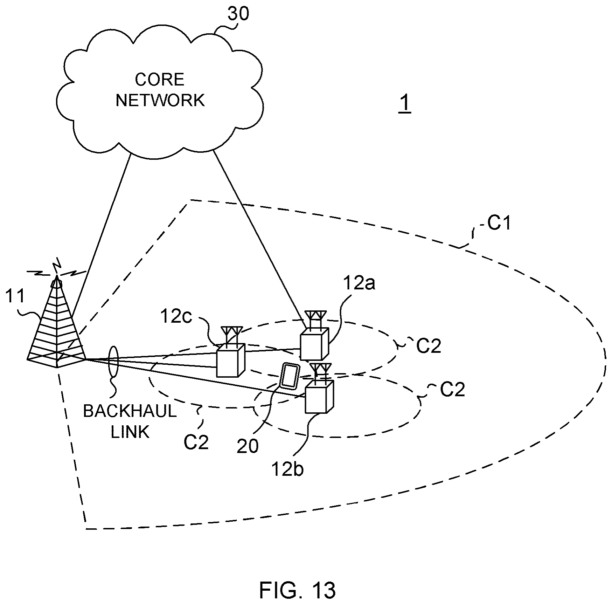

FIG. 13 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

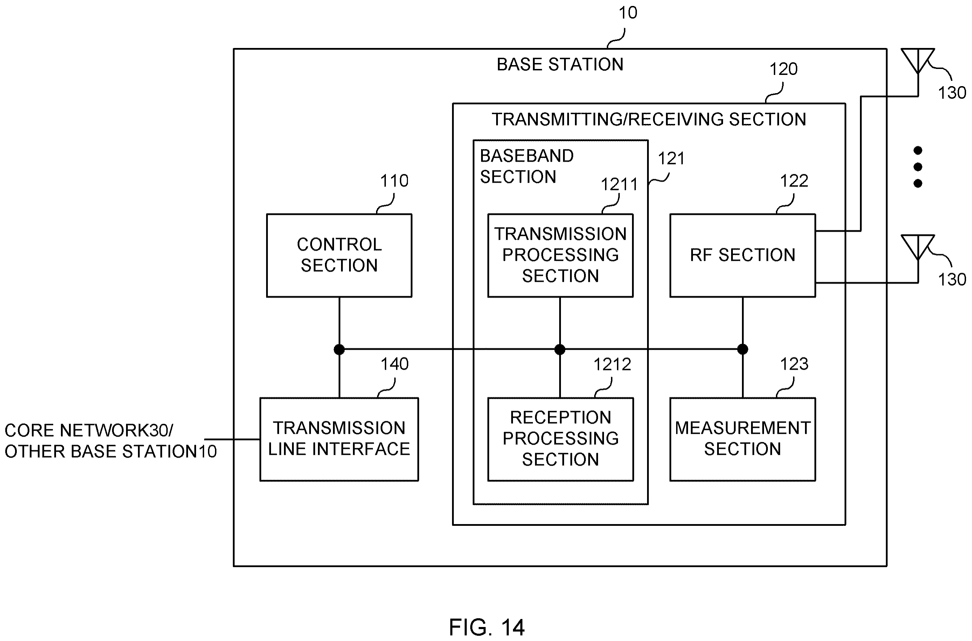

FIG. 14 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing an NF), another base station 10, or the like, and perform acquisition, transmission, and the like of user data (user plane data), control plane data, and the like for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The control section 110 may determine, based on at least one of report on whether simultaneous uplink transmission using a plurality of panels is supported and indication related to the simultaneous uplink transmission, a time period which the simultaneous uplink transmission is possible. The transmitting/receiving section 120 may receive one or more uplink signals by using the time period (the first embodiment).

### (User Terminal)

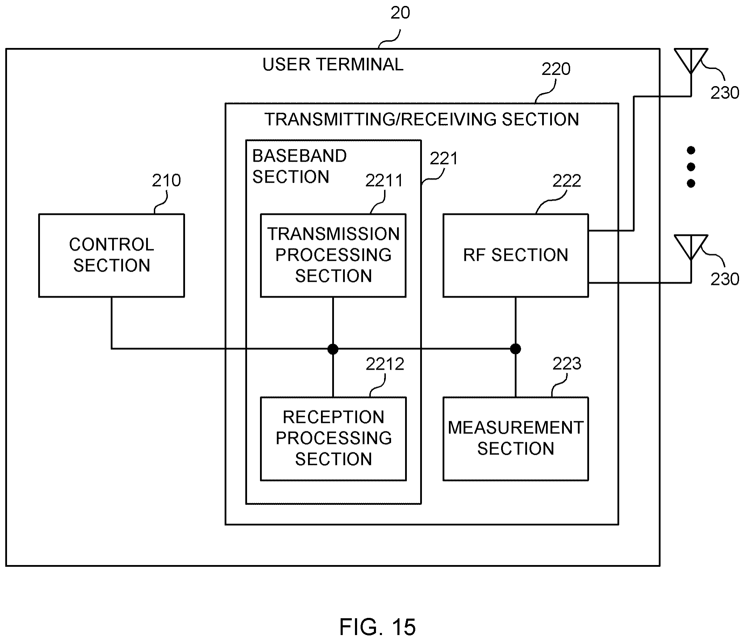

FIG. 15 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The control section 210 may determine, based on at least one of report on whether simultaneous uplink transmission using a plurality of panels is supported and indication related to the simultaneous uplink transmission, a time period which the simultaneous uplink transmission is possible. The transmitting/receiving section 220 may transmit one or more uplink signals by using the time period (the first embodiment).

The control section 210 may determine that the time period starts after a specific time period elapses after transmission of the report or reception of the indication (the first embodiment).

The control section 210 may determine that the time period starts after a specific time period elapses after reception of a response signal corresponding to the report or transmission of a response signal corresponding to the indication (the first embodiment).

The report may use a specific field included in group-based beam reporting (the second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

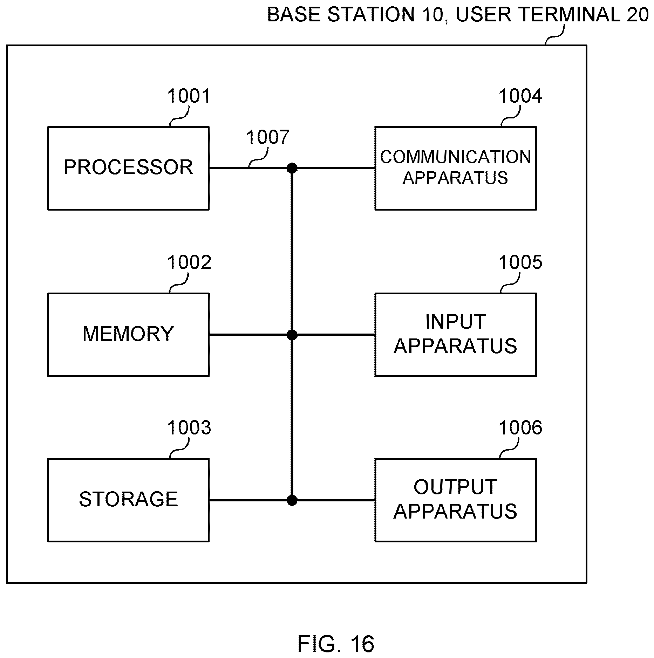

For example, a base station, a user terminal, and so on according to one embodiment of the present disclosure may function as a computer that executes the processes of the radio communication method of the present disclosure. FIG. 16 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

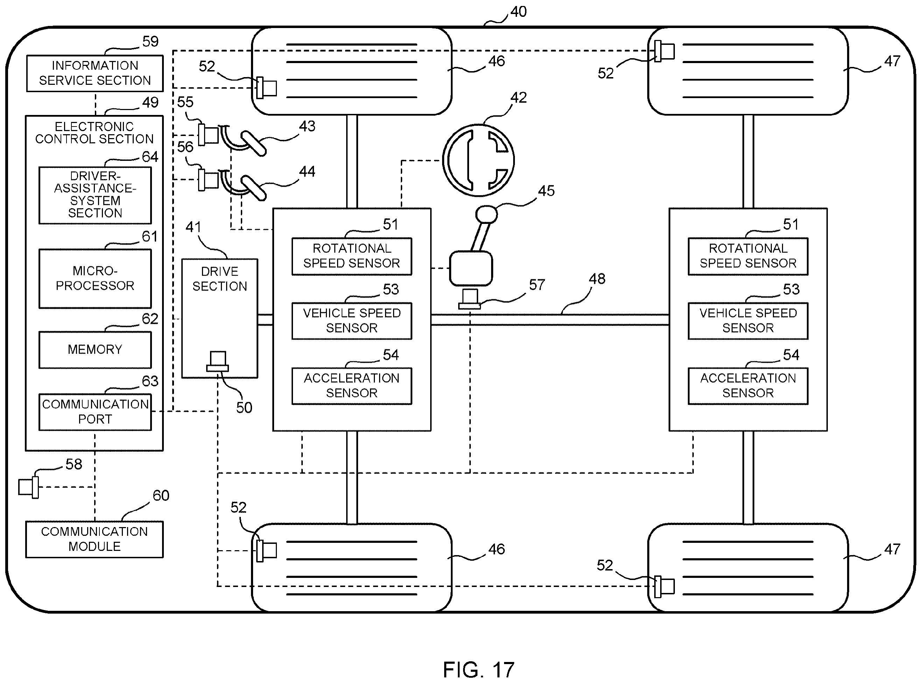

FIG. 17 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that determines, based on at least one of report on whether simultaneous uplink transmission using a plurality of panels is supported and indication related to the simultaneous uplink transmission, a time period which the simultaneous uplink transmission is possible; and
a transmitting section that transmits one or more uplink signals by using the time period.

2. The terminal according to claim 1, wherein
the control section determines that the time period starts after a specific time period elapses after transmission of the report or reception of the indication.

3. The terminal according to claim 1, wherein
the control section determines that the time period starts after a specific time period elapses after reception of a response signal corresponding to the report or transmission of a response signal corresponding to the indication.

4. The terminal according to claim 1, wherein
the report uses a specific field included in group-based beam reporting.

5. A radio communication method for a terminal, comprising:
determining, based on at least one of report on whether simultaneous uplink transmission using a plurality of panels is supported and indication related to the simultaneous uplink transmission, a time period which the simultaneous uplink transmission is possible; and
transmitting one or more uplink signals by using the time period.

6. A base station comprising:
a control section that determines, based on at least one of report on whether simultaneous uplink transmission using a plurality of panels is supported and indication related to the simultaneous uplink transmission, a time period which the simultaneous uplink transmission is possible; and
a receiving section that receives one or more uplink signals by using the time period.
